# EUROPÄISCHE PATENTSCHRIFT

(11) **EP 2 963 631 B1**
(45) Veröffentlichungstag und Bekanntmachung des Hinweises auf die Patenterteilung: **27.02.2019**
(21) Anmeldenummer: 15166689.8
(22) Anmeldetag: 07.05.2015
(51) Int. Cl.: G08G 1/14, G06K 9/00

(54) **VERFAHREN ZUM ERMITTELN EINES PARKPLATZES AUS EINER ANZAHL VON MESSPUNKTEN**
METHOD FOR DETERMINING A PARKING SPACE FROM A NUMBER OF MEASURING POINTS
PROCÉDÉ DE DÉTERMINATION D'UN STATIONNEMENT À PARTIR D'UNE PLURALITÉ DE POINTS DE MESURE

(30) Priorität: 02.07.2014 DE 102014212866
(43) Veröffentlichungstag der Anmeldung: 06.01.2016
(73) Patentinhaber: ROBERT BOSCH GMBH, 70442 Stuttgart (DE)
(72) Erfinder: Mueller, Martin, 70376 Stuttgart - Bad Cannstatt (DE); Lehner, Philipp, 75417 Muehlacker (DE)

(56) Entgegenhaltungen:
- EP-A2- 2 653 367
- DE-A1-102005 027 642
- DE-A1-102009 029 553
- DE-A1-102012 018 112
- US-A1- 2010 274 446
- US-A1- 2011 022 269

## Beschreibung

### Stand der Technik

Die vorliegende Erfindung betrifft ein Verfahren zum Ermitteln eines Parkplatzes aus einer Anzahl von Messpunkten.

Automatisierte Einparkfunktionen können aktuell nur genutzt werden, wenn sich ein Fahrzeug in unmittelbarer Nähe des Parkplatzes, beispielsweise einer Parklücke, befindet. Teilweise ist es notwendig, an Parklücken vorbeizufahren, um einem System eine Vermessung der Parklückenlänge zu ermöglichen. Dies ist z.B. der Fall bei in Serie befindlichen Einparksystemen, welche Ultraschallsensoren zur Vermessung der Parklücke nutzen. Der Einparkvorgang ist dabei typischerweise beschränkt, z.B. auf Längsparklücken. Die Schwierigkeit liegt in der Praxis darin, trotz eingeschränkter "Sicht" der Sensoren, z.B. durch eine beschränkte Reichweite oder einen beschränkten Öffnungswinkel der Sensoren oder eine Verdeckung der möglichen Parklücke durch Hindernisse, ausreichend Informationen über das Umfeld des Fahrzeuges zu sammeln, um eine hinreichend genaue Aussage über die Parklücke und die begrenzenden Hindernisse machen zu können. Solche Systeme bestimmen eine Größe von Parkplätzen anhand der den Parkplatz begrenzenden Hindernisse oder anhand von Markierungen auf dem Parkplatz. Daher liefern diese Systeme aufgrund weniger oder schlechter Sensorinformationen oftmals entsprechend ungenaue Resultate.

Ferner sind aus Forschungsarbeiten, z.B. der "Urban Challange", freiere Parkmanöver bekannt. Allerdings werden hierzu sowohl aufwändige Sensoren, z.B. Laserscanner, als auch höchste Rechenleistung zur Verfügung gestellt. Gleichzeitig bleibt der Anwendungsfall auf einen ausgewiesenen und im Voraus per GPS vermessenen Parkplatz beschränkt.

Die DE102004052347A1 beschreibt ein Verfahren zum Erfassen von Umgebungsinformationen im Nahbereich eines Fahrzeuges mittels Radar, bei dem jedem Sensor ein Evidenz-Histogramm, bestehend aus einer eindimensionalen Matrix mit n Feldern, zugeordnet ist. Dabei ist jedem Feld ein bestimmter Längs-Abstand relativ zum Fahrzeug in dessen Bewegungsrichtung zugeordnet und in die Felder wird jeweils ein den Quer-Abstand eines Gegenstandes normal zur Bewegungsrichtung des Fahrzeuges wiedergebender Wert eingetragen. Aus den Messwerten Richtung und Abstand eines Gegenstandes wird zunächst der Längs-Abstand und somit das Feld der Matrix bestimmt und anschließend der Quer-Abstand bestimmt und in das zuvor bestimmte Feld eingetragen.

Die DE102009029553A1 beschreibt ein Verfahren zur Erfassung der Orientierung einer Parklücke für ein Fahrzeug, wobei Tiefeninformation entlang einer Einparkstrecke mittels einer Abstandssensorvorrichtung an dem Fahrzeug erfasst wird, während das Fahrzeug an der Parklücke vorbeigeführt wird. Hieraus werden die Länge und Breite der Parklücke erfasst.

Die US2011/022269A1 offenbart ein Verfahren zum erfassen einer Parklücke basierend auf relativen Abstandständen und Bewegungsinformationen.

Die DE102005027642A1 offenbart ein Verfahren und eine Vorrichtung zur Unterstützung eines Einparkvorgangs eines Fahrzeugs. Dabei wird eine Parklücke bei einer Vorbeifahrt an dieser Parklücke erkannt.

Die EP2653367A2 offenbart ein Parkhilfeverfahren, in dem eine Fahrzeugumgebung mittels einer Radarvorrichtung erfasst wird und Parkplätze basierend auf Gruppen von Reflexionspunkten erkannt werden.

### Offenbarung der Erfindung

Die Erfindung betrifft ein Verfahren zum Ermitteln eines Parkplatzes aus einer Anzahl von Messpunkten gemäß Anspruch 1, wobei ein Messpunkt jeweils eine Position eines Hindernisses im Umfeld eines Fahrzeuges beschreibt umfasst die Schritte eines Festlegens einer Suchspur vor dem Fahrzeug, entlang derer mögliche Parkplätze angeordnet sind, eines Bestimmens einer Ausrichtung möglicher Parkplätze gegenüber der Suchspur, eines Zuordnens der Messpunkte zu jeweils einem zugehörigen Punkt auf der Suchspur unter Berücksichtigung der bestimmten Ausrichtung möglicher Parkplätze gegenüber der Suchspur und eines Ermittelns eines Parkplatzes basierend auf den Punkten der Suchspur, denen ein Messpunkt zugeordnet wurde. Vorteil des Verfahrens ist die Allgemeingültigkeit sowie die Möglichkeit nicht-lokale Daten zur Bestimmung der Ausrichtung möglicher Parkplätze zu nutzen. Da die Suche auf eine kleine Anzahl unterschiedlicher Ausrichtungen eingeschränkt werden kann, fallen rechenintensive Rotationsoperationen weg. Parkplätze werden effizient, robust und flexibel erkannt. Dabei wird insbesondere ein Ermitteln von Parkplätzen ermöglicht, die in Bereichen um das Fahrzeug liegen, die durch Sensoren, welche die Messpunkte liefern, noch nicht voll
eingesehen werden können. Das Verfahren ist zudem in der Lage auf der Basis von Messpunkten mit geringer Güte und Auflösung ein zuverlässiges Ermitteln von Parkplätzen zu ermöglichen. Dabei wird die benötigte Rechenleistung bzw. Rechenzeit minimiert und bleibt trotz der Komplexität der Aufgabe gering. Das Verfahren kann zudem bei Längs-, Quer und Diagonalparklücken sowie bei Garageneinfahrten und Engstellen aller Art eingesetzt werden. Das erfindungsgemäße Verfahren eignet sich besonders für ein vorausschauendes Erkennen von Parkplätzen (z.B. anhand eines Stereo-Video-Sensors).

Die Unteransprüche zeigen bevorzugte Weiterbildungen der Erfindung.

Gemäß der Erfindung, wenn jedem Punkt der Suchspur, dem ein Messpunkt zugeordnet wurde, wird ferner ein Abstandswert zugeordnet, der einen Abstand zwischen dem jeweils zugehörigen Messpunkt und der Suchspur entsprechend der Ausrichtung möglicher Parkplätze beschreibt, und wird ein Parkplatz ermittelt, wenn zumindest ein Punkt auf der Suchspur einen Abstandswert aufweist, der um einen bestimmten Tiefenwert größer ist, als die Abstandswerte der an den zumindest einen Punkt angrenzenden Punkte auf der Suchspur, und zwischen den angrenzenden Punkten ein bestimmter Mindestabstand liegt. Somit kann die Lage möglicher Parkplätze besonders genau definiert werden. Zudem können die Anforderungen an die Dimensionen eines Parkplatzes genau bestimmt werden und somit eine fehlerhafte Ermittlung von Parkplätzen vermieden werden.

Auch gemäß der Erfindung wenn den Punkten auf der Suchspur, denen kein Messpunkt zugeordnet wird, wird ein vorgegebener Abstandswert zugeordnet. Damit werden auch Bereiche für die keine Messpunkte zur Verfügung stehen in das Ermitteln einbezogen, wobei eine hohe Wahrscheinlichkeit für ein korrektes Ermitteln von Parkplätzen in diesen Bereichen besteht.

Auch ist es vorteilhaft, wenn die Suchspur im Wesentlichen einem Straßenverlauf folgt. Da typischerweise mehrere Parkplätze entlang des Straßenverlaufs eine gegenüber dem Straßenverlauf gleiche Ausrichtung haben, wird somit die Suche auf eine kleine Anzahl unterschiedlicher Ausrichtungen beschränkt.

Beispielsweise, aber nicht innerhalb des beanspruchten Schutzumfang, könnte die Suchspur entlang einer Richtung der letzten Geradeausfahrt des Fahrzeuges festgelegt werden, die durch eine Auswertung von Fahrzeugsensoren des Fahrzeuges erkannt wird. Somit würde es ermöglicht, eine Suchspur zu erzeugen, die einer tatsächlichen zu erwartenden Bewegungsbahn des Fahrzeuges entspricht. Dies ist auch dann möglich, wenn keinerlei Karte verfügbar ist.

Ebenso beispielsweise, jedoch nicht innerhalb des Schutzumfangs der Ansprüche, könnte die Suchspur basierend auf einer Auswertung von Positionsdaten des Fahrzeuges und einer Karte festgelegt. Somit könnte die Suchspur an die Lage möglicher Parkplätze angepasst werden oder eine Suchspur auf einfache Weise entlang eines Straßenverlaufs festgelegt werden.

Gemäß der Erfindung, wird die Suchspur basierend auf einer Erkennung von Straßenmarkierungen oder des Straßenrandes festgelegt, die durch eine Mustererkennung aus einem Umgebungsbild des Fahrzeuges erkannt werden. Somit wird es ermöglicht eine Suchspur zu erzeugen, die einer zu erwartenden Bewegungsbahn des Fahrzeuges oder einem Straßenverlauf entspricht. Dies ist auch dann möglich, wenn keinerlei Karte verfügbar ist.

Es ist ebenso vorteilhaft, wenn die Ausrichtung möglicher Parkplätze als parallele, senkrechte oder diagonale Richtung, insbesondere eine um 45 Grad gegenüber der Suchspur angewinkelte diagonale Richtung, gegenüber der Suchspur bestimmt wird. Durch diese vorteilhaft gewählten Ausrichtungen kann bereits ein hoher Anteil aller Parkplätze unter minimalem Rechenaufwand ermittelt werden.

Beispielsweise ist es auch möglich die Ausrichtung möglicher Parkplätze basierend auf einer Auswertung von Positionsdaten des Fahrzeuges und einer Karte zu bestimmen. Somit kann die Ausrichtung entsprechend einer zu erwartenden Ausrichtung der Parkplätze in der Umgebung des Fahrzeuges gewählt werden. Die Wahrscheinlichkeit eines korrekten Ermittelns eines Parkplatzes wird erhöht und der benötigte Rechenaufwand wird gering gehalten.

Beispielsweise, könnte die Ausrichtung möglicher Parkplätze basierend auf einer früheren Ausrichtung des Fahrzeuges bestimmt werden, als dieses in einer Umgebung einer aktuellen Position geparkt war. Somit kann die Ausrichtung entsprechend einer zu erwartenden Ausrichtung der Parkplätze in der Umgebung des Fahrzeuges gewählt werden, wobei insbesondere in einer häufig zum Parken genutzten Umgebung die Wahrscheinlichkeit eines korrekten Ermittelns eines Parkplatzes erhöht wird.

Erfindungsgemäß wird die Ausrichtung möglicher Parkplätze basierend auf einem Umgebungsbild des Fahrzeuges bestimmt, welches insbesondere mittels einer Hough-Transformation ausgewertet wird. Dadurch wird eine kostengünstige und sichere Erfassung der typischen Ausrichtung möglicher Parkplätze in der Umgebung des Fahrzeuges erreicht.

Gemäß der Erfindung, wenn mehrere Suchspuren festgelegt werden und das Bestimmen einer Ausrichtung, wird das Zuordnen der Messpunkte und das Ermitteln eines Parkplatzes für jede der Suchspuren ausgeführt, Kurze Beschreibung der Zeichnungen

Nachfolgend werden Beispiele und Ausführungsbeispiele der Erfindung unter Bezugnahme auf die begleitende Zeichnung im Detail beschrieben. In der Zeichnung ist:
- Figur 1: eine beispielhafte Umgebungskarte eines Fahrzeuges, in der Messpunkte dargestellt sind,
- Figur 2: die beispielhafte Umgebungskarte eines Fahrzeuges, in der Messpunkte und eine Suchspur dargestellt sind,
- Figur 3: die beispielhafte Umgebungskarte eines Fahrzeuges, in der Messpunkte, die Suchspur und eine Ausrichtung möglicher Parkplätze dargestellt sind,
- Figur 4: die beispielhafte Umgebungskarte eines Fahrzeuges, in der Messpunkte, die Suchspur, die Ausrichtung möglicher Parkplätze sowie hinzugefügte Abstandswerte dargestellt sind,
- Figur 5: eine grafische Darstellung des der beispielhaften Umgebungskarte zugehörigen Datenvektors d[x],
- Figur 6: eine alternative Ausrichtung möglicher Parkplätze gegenüber der Suchspur, und
- Figur 7: eine Anzahl mehrerer Parkplätze, die vor bzw. hinter Hindernissen ermittelt wurden.

### Ausführungsformen der Erfindung

In einem ersten Beispiel der Ermittlung eines Parkplatzes 1 aus einer Anzahl von Messpunkten 2, umfasst das Verfahren die Schritte eines Festlegens einer Suchspur 4, eines Bestimmens einer Ausrichtung, eines Zuordnens der Messpunkte 2 und eines Ermittelns eines Parkplatzes 1. Die Schritte werden aufeinanderfolgend in einer Schleife durchgeführt, solange das Ermitteln eines Parkplatzes 1 erforderlich ist. So könnte das Verfahren beispielsweise durch eine Aktivierung eines Parkhilfesystems gestartet werden und nach der Durchführung eines Einparkvorganges beendet werden. Eine Vorrichtung, die das erfindungsgemäße Verfahren ausführt ist in einem Fahrzeug angeordnet. Diese Vorrichtung wird von den Umgebungssensoren des Fahrzeuges über eine Datenleitung mit Daten beliefert, welche die Messpunkte 2 beschreiben, wobei jeder Messpunkt 2 jeweils eine Position eines Hindernisses im Umfeld des Fahrzeuges 3 beschreibt.

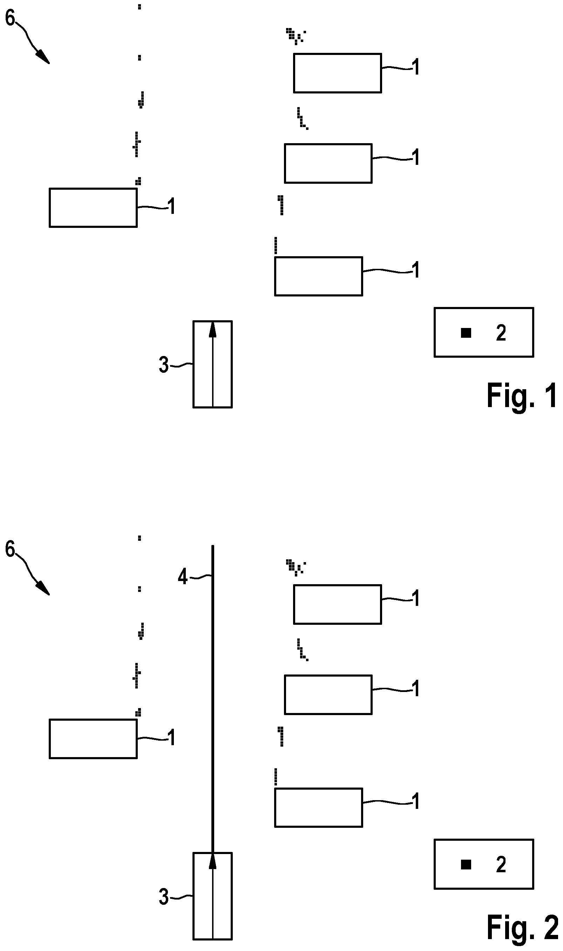

In diesem ersten Beispiel werden die Messpunkte 2 in eine Umgebungskarte 6 des Fahrzeuges 3 eingetragen, welche ein aktuelles Umfeld des Fahrzeuges 3 abbildet. Eine solche Umgebungskarte 6 ist beispielhaft in Figur 1 gezeigt. Der Bezugspunkt der Umgebungskarte 6 wird durch das Fahrzeug 3 gebildet. Die Front des Fahrzeuges 3 ist in der gezeigten Umgebungskarte 6 nach oben gerichtet und wird durch einen Pfeil symbolisiert. In die Umgebungskarte 6 wurden bereits mehrere Messpunkte 2 eingetragen, die hier im Wesentlichen in einem Bereich vor dem Fahrzeug 3 liegen. In Figur 1 sind zur Orientierung ebenfalls die zu ermittelnden Parkplätze 1 dargestellt, die jedoch zu dieser anfänglichen Phase des Verfahrens noch nicht ermittelt wurden. Es ist ersichtlich, dass ein einziges Hindernis oder ein Teil eines Hindernisses im Umfeld des Fahrzeuges 3, beispielsweise ein parkendes Fahrzeug, durch mehrere Messpunkte 2 beschrieben werden kann. Es ist aus Figur 1 ebenfalls ersichtlich, dass nur sehr wenige Messpunkte 2 vorliegen. Insbesondere ist es nicht möglich, Hindernisse, beispielsweise geparkte Fahrzeuge, z.B. anhand der Kontur, zu erkennen. Auch die Ausrichtung 5 möglicher Parklücken lässt sich anhand der wenigen Messpunkte 2 nicht zuverlässig bestimmen. Dennoch gelingt durch das Verfahren ein robustes und zufriedenstellendes Ermitteln von Parkplätzen 1.

Beispielsweise erfolgt das Festlegen der Suchspur 4, entlang derer mögliche Parkplätze angeordnet sind. Um die Suchspur 4 festzulegen werden zunächst Positionsdaten des Fahrzeuges 3 ausgelesen, die beispielsweise von einem GPS-System bereitgestellt werden, welches von einem Navigationssystem umfasst wird. Die entsprechende Position wird auf der Karte gesucht und ein Straßenverlauf, der entsprechend der Karte vor dem Fahrzeug 3 liegt, wird als eine Suchspur 4 in die Umgebungskarte 6 übertragen. Die Suchspur 4 folgt somit im Wesentlichen einem Straßenverlauf. Dabei ist es in diesem Schritt vorteilhaft, einen Richtungssensor, beispielsweise einen Kompass, zu nutzen, um die Ausrichtung des Fahrzeuges 3 gegenüber der Karte bzw. der Umgebungskarte 6 zu bestimmen. Somit wird eine korrekte Lage der Suchspur 4 in der Umgebungskarte 6 erreicht.

Das Ergebnis des Festlegens der Suchspur 4 ist in Figur 2 gezeigt, welche, mit Ausnahme der zuvor festgelegten und nun dargestellten Suchspur 4, der Figur 1 entspricht. Die Suchspur 4 wurde in diesem ersten Beispiel basierend auf einer Auswertung von Positionsdaten des Fahrzeuges 3 und einer Karte festgelegt. Die Suchspur 4 folgt einer in Figur 2 nicht dargestellten Straße, die vor dem Fahrzeug 3 geradeaus verläuft. Die Karte ist in diesem ersten Beispiel eine Straßenkarte eines Navigationssystems.

Das Bestimmen einer Ausrichtung möglicher Parkplätze gegenüber der Suchspur 4 erfolgt in diesem ersten Beispiel dadurch, dass eine typische Ausrichtung von Parkplätzen entlang des Straßenverlaufs gewählt wird. Dazu erfolgt eine Auswertung von Positionsdaten des Fahrzeuges 3 und der Karte des Navigationssystems. Dabei umfasst die Karte des Navigationssystems die benötigten Informationen bezüglich der typischen Ausrichtung von Parkplätzen entlang der von der Karte umfassten Straßen. Das Fahrzeug 3 wird mittels des GPS-Systems lokalisiert und die entsprechenden Informationen aus der Karte ausgelesen.

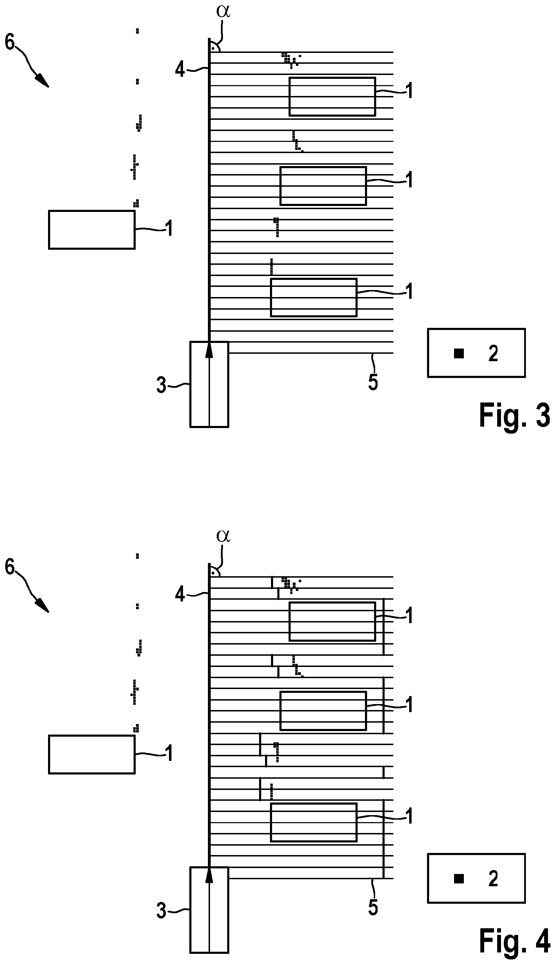

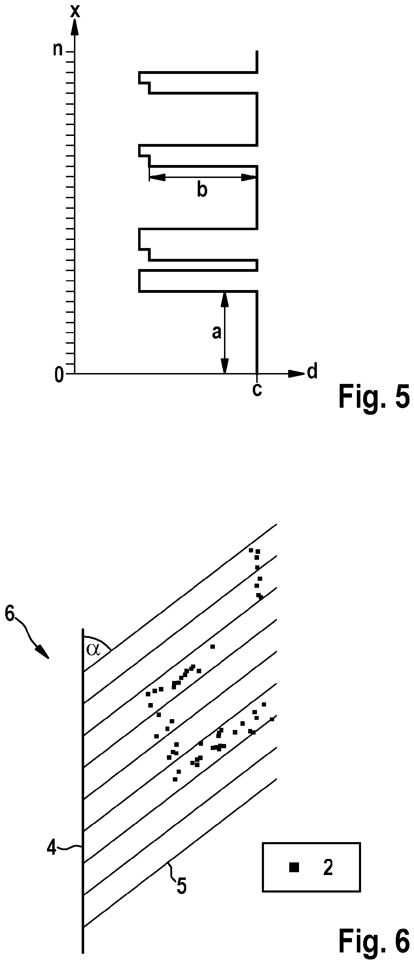

Das Ergebnis des Bestimmens einer Ausrichtung 5 möglicher Parkplätze gegenüber der Suchspur 4 ist in Figur 3 gezeigt, welche, mit Ausnahme der nun angedeuteten Ausrichtung 5 möglicher Parkplätze, der Figur 2 entspricht. In diesem ersten Beispiel wurde die Ausrichtung 5 möglicher Parkplätze gegenüber der Suchspur 4 als senkrecht gelegen bestimmt, da die Straße in der sich das Fahrzeug 3 in dem in Figur 3 gezeigten Beispiel befindet, gemäß der Karte des Navigationssystems hauptsächlich Querparklücken aufweist. Die Ausrichtung 5 eines Parkplatzes 1 ist in diesem ersten Beispiel durch dessen Längsachse definiert. Die Längsachse eines Parkplatzes 1 entspricht der Längsachse des Fahrzeuges 3, wenn dieses in korrekter Ausrichtung auf dem Parkplatz 1 angeordnet, also geparkt ist. Es ergibt sich somit in der in Figur 3 gezeigten beispielhaften Umgebungskarte 6 ein Winkel α von 90 Grad zwischen der Ausrichtung 5 möglicher Parkplätze und der Suchspur 4. Eine andere mögliche Ausrichtung möglicher Parkplätze gegenüber der Suchspur 4 ist in Figur 6 gezeigt. In der dort gezeigten beispielhaften Umgebungskarte 6 wird die Ausrichtung 5 durch einen Winkel α von 50 Grad beschrieben.

Das Zuordnen der Messpunkte 2 zu jeweils einem zugehörigen Punkt auf der Suchspur 4 unter Berücksichtigung der bestimmten Ausrichtung 5 möglicher Parkplätze gegenüber der Suchspur 4 erfolgt in diesem ersten Beispiel indem jeder Messpunkt 2 in Richtung der Ausrichtung 5 möglicher Parkplätze auf die Suchspur 4 projiziert wird. Ein zugehöriger Punkt auf der Suchspur 4 ist also der Schnittpunkt einer Geraden mit der Suchspur 4, wobei die Gerade durch den entsprechenden Messpunkt 2 verläuft und den Winkel α gegenüber der Suchspur 4 aufweist. Dabei wird jedem Punkt der Suchspur 4, dem ein Messpunkt 2 zugeordnet wurde, ferner ein Abstandswert d zugeordnet, der einen Abstand zwischen dem jeweils zugehörigen Messpunkt 2 und der Suchspur 4 entsprechend der Ausrichtung 5 möglicher Parkplätze beschreibt. Da sowohl die Lage der Messpunkte 2 als auch die Lage der Suchspur 4 in der Umgebungskarte 6 bekannt ist, wird der Abstandswert d mittels einfacher geometrischer Berechnungen ermittelt.

Die Abstandswerte d werden in diesem ersten Beispiel in einem Datenvektor d[x] gespeichert. Dabei beschreibt x die Lage des zugehörigen Punktes auf der Suchspur 4. In diesem ersten Beispiel weist die Suchspur 4 eine Anzahl von "n" Punkten auf. Die Lage der Punkte auf der Suchspur ist dabei so gewählt, dass benachbarte Punkte, projiziert auf das tatsächliche Umfeld des Fahrzeuges 3, jeweils einen Abstand von 0,2m zueinander haben. Der Datenvektor d[x] hat die Dimension "n". Wird einem Punkt ein Abstandswert d zugeordnet, so wird dieser an der entsprechenden Position in den Datenvektor d[x] eingetragen. Aus dem Wert x kann auf eine tatsächliche Position des entsprechenden Punktes in dem Umfeld des Fahrzeuges 3 geschlossen werden, da sowohl die Lage der Suchspur 4 als auch der Abstand zwischen den Punkten bekannt ist. Den Punkten auf der Suchspur 4, denen kein Messpunkt 2 zugeordnet wurde, da beispielsweise für einen bestimmten Bereich im Umfeld des Fahrzeuges 3 keine Messwerte vorliegen, wird ein vorgegebener Abstandswert c zugeordnet. Somit wird in diesem Beispiel dem Datenvektor d[x] für jeden Punkt, also für jedes x, ein Abstandswert d zugeordnet, der entweder durch die Lage eines Messpunktes 2 gegenüber der Suchspur 4 definiert ist oder gleich einem vorgegebenen Abstandswert c ist. Der Abstandswert c kann dabei entsprechend der Breite einer Straße angepasst werden, die beispielsweise aus der Karte des Navigationssystems ermittelt wird. Somit werden in diesem ersten Beispiel zweidimensionale Umfelddaten über die festgelegte Ausrichtung nun in eine eindimensionale Datenfolge umgewandelt. Diese wird im Folgenden zur Suche nach Parkplätzen verwendet. In diesem ersten Beispiel werden lediglich Parkplätze 1 auf einer Seite der Suchspur 4 erfasst. Ein Erfassen von Parkplätzen 1 auf beiden Seiten der Suchspur 4 wird erreicht, indem jedem Punkt der Suchspur 4 ein linker und rechter Abstandswert d zugeordnet wird, oder auch negative Abstandswerte ermöglicht werden.

Das Ergebnis des Zuordnens der Messpunkte 2 ist in den Figuren 4 und 5 gezeigt. Figur 5 ist dabei eine grafische Darstellung des Datenvektors d[x]. Es ist ersichtlich, dass jedem Wert auf der x-Achse, also jedem Punkt auf der Suchspur 4, ein Abstandswert d zugeordnet ist. Durch einen Vergleich der Figuren 4 und 5 wird ersichtlich, dass der Datenvektor d[x] das vor dem Fahrzeug 3 gelegene Umfeld des Fahrzeuges 3 entsprechend der Umgebungskarte 6 widergibt.

Es folgt das Ermitteln eines Parkplatzes 1 basierend auf den Punkten der Suchspur 4, denen ein Messpunkt 2 zugeordnet wurde. Zudem basiert das Ermitteln des Parkplatzes 1 in diesem ersten Beispiel auch auf den Punkten der Suchspur 4, denen der Abstandswert c zugeordnet wurde. Dies erfolgt durch eine Auswertung des Datenvektors d[x].

Ein Parkplatz wird dann ermittelt, also als vorhanden betrachtet, wenn zumindest ein Punkt auf der Suchspur 4 einen Abstandswert d aufweist, der um einen bestimmten Tiefenwert b größer ist, als die Abstandswerte d der an den zumindest einen Punkt angrenzenden Punkte auf der Suchspur 4, und zwischen den angrenzenden Punkten ein bestimmter Mindestabstand a liegt. Der Tiefenwert b entspricht dabei in diesem ersten Beispiel der Länge eines Kleinwagens und der Mindestabstand a entspricht dabei in diesem ersten Beispiel der Breite des Fahrzeuges 3 zuzüglich einem Sicherheitsabstand. Somit können Parkplätze 1 ermittelt werden, die neben einem Kleinwagen liegen und breit genug für ein Einparken des Fahrzeuges 3 sind. In diesem Beispiel ist der Tiefenwert b zu 3m und der Mindestabstand a zu 2,4m gewählt. Durch diese Wahl des Tiefenwertes b und des Mindestabstandes a wird in diesem ersten Beispiel eine Suche nach einer Querparklücke durchgeführt. Es ist für den Fachmann ersichtlich, dass durch den Tiefenwert b und den Mindestabstand a eine Dimension eines zu ermittelnden Parkplatzes oder zumindest einer Lücke definiert wird, die einen Parkplatz umfassen kann. So ist ebenfalls ersichtlich, dass eine Suche nach einem Längsparkplatz erfolgen kann, indem die Werte des Tiefenwertes b und des Mindestabstandes a entsprechend gewählt werden, wobei für Längsparklücken auch ein Winkel α von 90 Grad gesetzt wird.

Der Datenvektor d[x] wird nun für jeden Punkt, also für jeden Wert von x, analysiert. Dazu wird der Datenvektor d[x] dahingehend untersucht, ob eine Reihe von Punkten vorliegt, in der alle Punkte einen um den Tiefenwert b größeren Abstandswert d aufweisen als die vor und hinter dieser Reihe gelegenen Punkte. Somit werden Lücken entlang der Suchspur 4 mit einer ausreichenden Tiefe erkannt. Im Folgenden wird zudem eine ausreichende Breite der Lücke geprüft. Dazu wird der Datenvektor d[x] dahingehend untersucht, ob die zuvor identifizierten Reihen von Punkten x eine ausreichende Länge haben. Da der Mindestabstand a in dieser ersten Ausführungsform 2,4m beträgt und benachbarte Punkte x im tatsächlichen Umfeld des Fahrzeuges 3 einen Abstand von 0,2m aufweisen, bedeutet dies, dass ein Parkplatz als gegeben ermittelt wird, wenn eine zuvor identifizierte Reihe von Punkten mindestens 12 aufeinanderfolgende Punkte umfasst.

Wenn also beispielsweise die Bedingung d[x+0,4m...x +2,8m] > d[x] + 3m erfüllt ist, so liegt eine Parklücke auf einer Höhe von 0,4m bis 2,8m entlang der Suchspur 4 vor dem Fahrzeug 3.

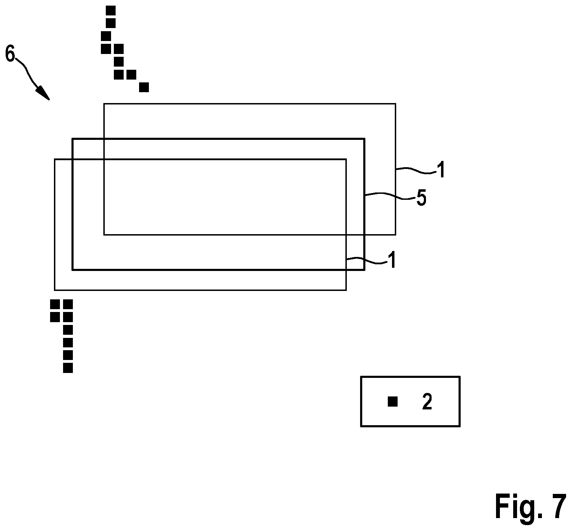

Es werden also Parkplätze 1 vor und hinter Hindernissen ermittelt. Aufgrund der diskreten Vorgehensweise an jedem Punkt des x-d-Diagramms, also des Datenvektors d[x], kann dies auch mehrfach geschehen. Dies ist beispielhaft in Figur 7 gezeigt. Indem überlappende Parkplätze 1 über eine Mittelwertbildung zusammengefasst werden, wird eine finaler Parkpatz 5 ermittelt.

Die Vorder/-Hinterkante eines Parkplatzes ergibt sich aus der Tiefe des benachbarten Hindernisses, falls die Lücke tief genug ist. Falls die Lücke nicht tief genug ist, was beispielsweise passieren kann, wenn das benachbarte Hindernis kürzer als das Fahrzeug 3 ist, also beispielsweise ein Kleinwagen ist, darf der Parkplatz 1 gegenüber dem Hindernis überstehen. Dabei wird in diesem ersten Beispiel die Hinterkante des Parkplatzes 1 in der Umgebungskarte 6 entsprechend einem minimalen Abstandswert d des Datenvektors d[x] in diesem Bereich festgelegt.

Ein zweites Beispiel entspricht im Wesentlichen dem ersten Beispiel jedoch wird die Ausrichtung 5 möglicher Parkplätze basierend auf einer früheren Ausrichtung des Fahrzeuges 3 bestimmt, als dieses in einer Umgebung einer aktuellen Position geparkt war. Dazu wird bei einem Parkvorgang des Fahrzeuges 3 dessen Parkposition und die Ausrichtung des Fahrzeuges 3 und somit auch die Ausrichtung des jeweiligen Parkplatzes gespeichert. Dabei kann die Parkposition in Form einer GPS-Position und die Ausrichtung des Parkplatzes in Form einer Himmelsrichtung gespeichert werden. Befindet sich das Fahrzeug erneut in einer Umgebung dieser Parkposition, so wird die gespeicherte Ausrichtung abgerufen und in eine Ausrichtung möglicher Parkplätze gegenüber der Suchspur 4 umgesetzt und im weiteren Verlauf des beispielhaften Verfahrens genutzt.

In alternativen Beispiele erfolgt das Bestimmen einer Ausrichtung 5 möglicher Parkplätze gegenüber der Suchspur 4 indem diese Ausrichtung 5 möglicher Parkplätze als eine konstante vorgegebene Ausrichtung übernommen wird. Erfindungsgemäß wird die Ausrichtung 5 möglicher Parkplätze basierend auf einem Umgebungsbild des Fahrzeuges 3 bestimmt. Dabei wird zunächst ein Umgebungsbild des Fahrzeuges 3 mit einer an dem Fahrzeug 3 angeordneten Kamera erfasst. Dieses Umgebungsbild kann vorteilhaft mittels einer Hough-Transformation ausgewertet und somit Kanten aus dem Umgebungsbild ermittelt. Abhängig von der Lage dieser Kanten kann auf eine Ausrichtung anderer parkender Fahrzeuge geschlossen werden. Diese Ausrichtung anderer parkender Fahrzeuge wird in eine Ausrichtung möglicher Parkplätze gegenüber der Suchspur 4 umgesetzt und im weiteren Verlauf des erfindungsgemäßen Verfahrens genutzt.

Ein drittes Beispiel entspricht im Wesentlichen den zuvor beschriebenen Beispiele jedoch wird die Suchspur 4 entlang einer Richtung der letzten Geradeausfahrt des Fahrzeuges 3 festgelegt, die durch eine Auswertung von Fahrzeugsensoren des Fahrzeuges 3 erkannt wird. Es werden die Geschwindigkeit, der Lenkwinkel und die Lenkwinkeländerung des Fahrzeuges 3 erfasst. Sind der Lenkwinkel und die Lenkwinkeländerung hinreichend klein und liegt die Geschwindigkeit beispielsweise oberhalb der Schrittgeschwindigkeit, so wird die aktuelle Fahrzeugausrichtung als eine Richtung einer geradlinigen Suchspur 4 übernommen. In einer FIFO-Quelle werden so die Fahrzeugausrichtungen der letzten 50 Meter gespeichert. Das System verwendet je nach verfügbarer Rechenkapazität die letzte oder die letzten Fahrzeugausrichtungen. Es hat sich gezeigt, dass allein die Verwendung der letzten Fahrzeugausrichtung sehr effektiv ist. Da Parkplätze vorausschauend erkannt werden können, fallen Ausholmanöver als Störung nicht ins Gewicht und die letzte Fahrzeugausrichtung ist die korrekte Fahrzeugausrichtung.

Eine Ausführungsform der Erfindung entspricht im Wesentlichen den zuvor beschriebenen Beispiele jedoch wird die Suchspur 4 basierend auf einer Erkennung von Straßenmarkierungen oder des Straßenrandes festgelegt, die insbesondere durch eine Mustererkennung aus einem Umgebungsbild des Fahrzeuges 3 erkannt werden.

Ein weiteres Beispiel entspricht im Wesentlichen den zuvor beschriebenen Beispiele und Ausführungsformen jedoch werden im Schritt des Festlegens einer Suchspur 4 mehrere Suchspuren 4 festgelegt, wobei die folgenden Schritte des Verfahrens für jede der festgelegten Suchspuren 4 ausgeführt werden. Dabei folgen in diesem weiteren Beispiel unterschiedliche Suchspuren 4 jeweils einem unterschiedlichen Straßenverlauf im Umfeld des Fahrzeuges 3. So wird beispielsweise an einer Kreuzung jeweils eine Suchspur 4 entlang der sich kreuzenden Straßen festgelegt, wobei sich in diesem Beispiel die festgelegten Suchspuren 4 im Zentrum der Kreuzung schneiden.

Weitere Ausführungsformen der Erfindung zeichnen sich unter anderem dadurch aus, dass das erfindungsgemäße Verfahren mit einer wechselnden Ausrichtung 5 möglicher Parkplätze widerholt durchgeführt wird. Dabei werden beispielsweise die wichtigsten Ausrichtungen von möglichen Parkplätzen, z.B. 0 Grad, 90 Grad und 45 Grad gegenüber der Suchspur 4 zyklisch wechselnd angewendet.

Es sei insbesondere vermerkt, dass durch das erfindungsgemäße Verfahren auch Garagenparkplätze ermittelt werden können. Zudem ist die Suchspur 4 auf keinerlei Lage gegenüber dem Fahrzeug 3 festgelegt. So kann die Suchspur 4 ebenfalls in eine Richtung hinter, links oder rechts von dem Fahrzeug 3 gerichtet sein. Ferner ist es nicht notwendig, dass die Suchspur 4 zu dem Fahrzeug 3 führt.

Neben der obigen schriftlichen Offenbarung wird explizit auf die Offenbarung der Figuren 1 bis 7 verwiesen.

## Patentansprüche

1. Verfahren zum Ermitteln eines Parkplatzes (1) aus einer Anzahl von Messpunkten (2), welche anhand eines vorausschauenden Stereo-Video-Sensors oder eines vorausschauenden Mono-Video-Sensors geliefert werden, wobei ein Messpunkt (2) jeweils eine Position eines Hindernisses im Umfeld eines Fahrzeuges (3) beschreibt, umfassend die Schritte:
- Erfassung eines Umgebungsbildes des Fahrzeugs (3) mit einer an dem Fahrzeug (3) angeordneten Kamera,
- Auslesen von Positionsdaten des Fahrzeugs (3),
- Festlegen einer Suchspur (4), wobei die Suchspur (4) einer zu erwartenden Bewegungsbahn des Fahrzeugs entspricht und dem Straßenverlauf folgt und wobei die Suchspur basierend auf einer Erkennung von Straßenmarkierungen oder des Straßenrandes festgelegt wird, die durch eine Mustererkennung aus dem Umgebungsbild des Fahrzeugs erkannt werden.
- Bestimmen einer Ausrichtung (5) möglicher Parkplätze gegenüber der Suchspur (4) basierend auf dem Umgebungsbild des Fahrzeuges (3), die durch eine Mustererkennung aus dem Umgebungsbild des Fahrzeugs (3) erkannt werden,
- Zuordnen der Messpunkte (2) zu jeweils einem zugehörigen Punkt auf der Suchspur unter Berücksichtigung der bestimmten Ausrichtung (5) möglicher Parkplätze gegenüber der Suchspur (4), wobei ein zugehöriger Punkt auf der Suchspur (4) der Schnittpunkt einer Geraden mit der Suchspur (4) ist, wobei die Gerade durch den entsprechenden Messpunkt verläuft und einen Winkel (α) gegenüber der Suchspur (4) aufweist, wobei der Winkel (α) die Ausrichtung (5) beschreibt, wobei jedem Punkt der Suchspur (4), dem ein Messpunkt (2) zugeordnet wurde, ferner ein Abstandswert (d) zugeordnet wird, der einen Abstand zwischen dem jeweils zugehörigen Messpunkt (2) und der Suchspur (4) entsprechend der Ausrichtung (5) möglicher Parkplätze beschreibt, wobei den Punkten auf der Suchspur (4), denen kein Messpunkt (2) zugeordnet wird, ein vorgegebener Abstandswert (c) zugeordnet wird, wobei der vorgegebene Abstandswert (c) entsprechend der Breite einer Straße angepasst wird, die aus einer Karte des Navigationssystems ermittelt wird, und
- Ermitteln eines Parkplatzes (1) basierend auf den Punkten der Suchspur (4), denen ein Messpunkt (2) zugeordnet wurde, wobei ein Parkplatz (1) ermittelt wird, wenn:
o zumindest ein Punkt auf der Suchspur (4) einen Abstandswert (d) aufweist, der um einen bestimmten Tiefenwert größer ist, als die Abstandswerte (d) der an den zumindest einen Punkt angrenzenden Punkte auf der Suchspur (4), und
o zwischen den angrenzenden Punkten ein bestimmter Mindestabstand liegt.

2. Verfahren gemäß einem der vorhergehenden Ansprüche, **dadurch gekennzeichnet, dass** die Ausrichtung (5) möglicher Parkplätze als parallele, senkrechte oder diagonale Richtung, insbesondere eine um 45 Grad gegenüber der Suchspur (4) angewinkelte diagonale Richtung, gegenüber der Suchspur (4) bestimmt wird.

## Claims

1. Method for determining a parking space (1) from a number of measuring points (2) which are supplied by means of a predictive stereo-video sensor or of a predictive mono-video sensor, wherein a measuring point (2) describes in each case a position of an obstacle in the surroundings of a vehicle (3), comprising the steps:
- capturing an image of the surroundings of the vehicle (3) with a camera which is arranged on the vehicle (3),
- reading out position data of the vehicle (3),
- defining a search trace (4), wherein the search trace (4) corresponds to an expected movement path of the vehicle and follows the road profile, and wherein the search trace is defined on the basis of a detection of road markings or of the road boundary which are detected by means of pattern recognition from the image of the surroundings of the vehicle,
- determining an orientation (5) of possible parking spaces with respect to the search trace (4) on the basis of the pattern of the surroundings of the vehicle (3), which parking spaces are detected by means of image recognition from the image of the surroundings of the vehicle (3),
- assigning the measuring points (2) to, in each case, one associated point on the search trace taking into account the determined orientation (5) of possible parking spaces with respect to the search trace (4), wherein an associated point on the search trace (4) is the point of intersection of a straight line with the search trace (4), wherein the straight line runs through the corresponding measuring point and has an angle (α) with respect to the search trace (4), wherein the angle (α) describes the orientation (5), wherein each point of the search trace (4) to which a measuring point (d) has been assigned is also assigned a distance value (2) which describes a distance between the respectively associated measuring point (2) and the search trace (4) corresponding to the orientation (5) of possible parking spaces, wherein the points on the search trace (4) which are not assigned a measuring point (2) are assigned a predefined distance value (c), wherein the predefined distance value (c) is adapted in accordance with the width of a road which is determined from a map of the navigation system, and
- determining a parking space (1) on the basis of the points of the search trace (4) which have not been assigned a measuring point (2), wherein a parking space (1) is determined if:
o at least one point on the search trace (4) has a distance value (d) which is larger by a specific depth value than the distance values (d) of the points on the search trace (4) which adjoin the at least one point, and
o there is a specific minimum distance between the adjoining points.

2. Method according to one of the preceding claims, **characterized in that** the orientation (5) of possible parking spaces is determined with respect to the search trace (4) as a parallel, perpendicular or diagonal direction, in particular a diagonal direction which is at an angle of 45 degrees with respect to the search trace (4).

## Revendications

1. Procédé de recherche d'un emplacement de stationnement (1) parmi plusieurs points de mesure (2) délivrés au moyen d'un capteur vidéo stéréo observant vers l'avant ou d'un capteur vidéo mono observant vers l'avant, chaque point de mesure (2) décrivant la position d'un obstacle dans l'environnement d'un véhicule (3), le procédé comportant les étapes consistant à :
- saisir une image de l'environnement du véhicule (3) à l'aide d'une caméra disposée sur le véhicule (3),
- lire des données de position du véhicule (3),
- définir une trajectoire recherchée (4), la trajectoire recherchée (4) correspondant à une piste attendue de déplacement du véhicule qui suit l'évolution de la chaussée, la trajectoire recherchée étant définie sur la base de la reconnaissance de marquages sur la chaussée ou du bord de la chaussée qui sont détectés par une reconnaissance de motifs dans l'image de l'environnement du véhicule,
- déterminer une orientation (5) d'emplacements de stationnement possibles par rapport à la trajectoire recherchée (4) sur la base de l'image de l'environnement du véhicule (3), ces emplacements de stationnement étant reconnus par une reconnaissance de motifs dans l'image de l'environnement du véhicule (3),
- associer les points de mesure (2) à chaque point associé de la trajectoire recherchée en tenant compte de l'orientation (5) définie d'emplacements de stationnement possibles par rapport à la trajectoire recherchée (4), un point associé de la trajectoire recherchée (4) étant le point de concours d'une droite
- avec la trajectoire recherchée (4), la droite passant par le point de mesure correspondant et présentant un angle (α) par rapport à la trajectoire recherchée (4), l'angle (α) décrivant l'orientation (5), une valeur de distance (d) qui décrit la distance entre le point de mesure (2) associé et la trajectoire recherchée (4) en correspondance à l'orientation (5) d'emplacements de stationnement possibles étant associée à chaque point de la trajectoire recherchée (4) auquel un point de mesure (2) a été associé, une valeur de distance (c) prédéterminée étant associée aux points de la trajectoire recherchée (4) auxquels aucun point de mesure (2) n'a été associé, la valeur de distance (c) prédéterminée étant adaptée à la largeur d'une chaussée déterminée dans une carte du système de navigation et
- déterminer un emplacement de stationnement (1) sur la base des points de la trajectoire recherchée (4) auxquels un point de mesure (2) a été associé, un emplacement de stationnement (1) étant déterminé si :
• au moins un point de la trajectoire recherchée (4) présente une valeur de distance (d) supérieure d'une valeur de profondeur définie aux valeurs de distance (d) des points de la trajectoire recherchée (4) adjacents à au moins un point et
• une distance minimale définie existe entre les points adjacents.

2. Procédé selon l'une des revendications précédentes, **caractérisé en ce que** l'orientation (5) d'emplacements de stationnement possibles par rapport à la trajectoire recherchée (4) est déterminée comme étant une direction perpendiculaire ou diagonale, en particulier une direction diagonale formant un angle de 45 degrés par rapport à la trajectoire recherchée (4).
